# EUROPEAN PATENT APPLICATION

(11) **EP 4 428 669 A1**
(43) Date of publication of application: **11.09.2024**
(21) Application number: 23168647.8
(22) Date of filing: 19.04.2023
(51) Int. Cl.: G06F 3/0482, G06F 3/04847, H04M 1/72415, G06F 3/14

(54) **CONTROL UNIT AND METHOD FOR CONTROLLING A USER INTERFACE OF AN APPLIANCE**

(30) Priority: 06.03.2023 TR 202302461
(71) Applicant: BSH Hausgeräte GmbH, 81739 München (DE)
(72) Inventor: Sever, Sinan, Istanbul (TR); Rauch, Korbinian, 81379 München (DE); Ermutlu, Kayra, Istanbul (TR); Taptik, Metin, Istanbul (TR)

(57) **Abstract**

A control unit (114) for an appliance (110) is described, wherein the appliance (110) comprises a local user interface located at the appliance (110); wherein the appliance (110) comprises a control menu (200) with one or more submenus (201, 202) for selecting an operation program and/or for setting an operation parameter of the appliance (110); and wherein the appliance (110) is configured to be controlled using a remote user interface on a user device (120). The control unit (114) is configured to detect a user input at the local user interface for selecting a submenu (201, 202) of the control menu (200); and, in reaction to the detected user input, to cause the remote user interface to provide the selected submenu (201, 202) on the user device (120).

## Description

The present document relates to a control unit and a method for controlling a user interface of an appliance.

A household appliance, such as a washing machine, a dishwasher or an oven, typically comprises a user interface which allows a user to select an operation program of the appliance and/or to set an operation parameter for operation of the appliance. The user interface may comprise a display screen for providing a visual output and one or more control elements for receiving a user input.

The capabilities of the user interface of the appliance for providing a visual output and/or for receiving a user input may be limited due to space and/or cost restrictions, thereby limiting the comfort-of-use of the user interface.

The present document addresses the technical problem of enabling a comfortable and reliable user interaction with an appliance having a user interface with limited output and/or input capabilities. The technical problem is solved by each one of the independent claims. Preferred examples are described in the dependent claims.

According to an aspect, a control unit for an appliance, in particular a household appliance, is described. The appliance comprises a local user interface located directly at the appliance. The local user interface may comprise a (relatively small) display screen and/or one or more control elements (e.g., push buttons), which may be located at the housing of the appliance.

Furthermore, the appliance is configured to be controlled using a remote user interface on a (mobile and/or handheld) user device (such as a smartphone, a PC or a tablet PC). The remote user interface may be provided on a screen, in particular a touch screen, of the user device. The user device may interact with a processing unit (such as a server) for providing the remote user interface of the appliance. In particular, the user device may run a software application (e.g. an app on a smartphone), which is configured to interact with the processing unit (via a (wireless) communication network) to provide the remote user interface of the appliance on the user device. The processing unit may be configured to communicate with the appliance via a (wireless) communication network. Example communication networks are a WLAN, a LAN, a 3G, a 4G or a 5G network.

The appliance, in particular the (local) user interface of the appliance, comprises a control menu with one or more submenus for selecting an operation program and/or for setting an operation parameter of the appliance. The control menu may comprise one or more menu levels. At each menu level, one or more submenus may be provided. A submenu may comprise a set of (N) menu points (e.g., N=5 or more, or N=10 or more, or N=30 or more). Each menu point may be associated with
- an operation program of the appliance, (such as a heating program, a washing program, etc.) which is selected by selecting the corresponding menu point;
- an operation parameter of the appliance (such as the temperature, the rotation speed, etc.), which is set by selecting the corresponding menu point; or
- a submenu at the next lower level.

The control unit is configured to detect a user input at the local user interface for selecting a submenu of the control menu. The user input may comprise or may consist in an actuation of a control element of the local user interface. The selected submenu may comprise a set of (N) menu points. Each of the one or more menu points may be associated with a respective operation program of the appliance (wherein the respective operation program is selected when selecting the menu point).

The local user interface of the appliance may be such that the set of menu points of the selected submenu cannot be displayed on the display screen of the appliance in a self-explanatory manner and/or in conjunction with a textual description and/or using an icon for the one or more menu points (e.g., due to the limited size and/or due to the limited resolution of the display screen). The different menu points may e.g., be represented on the local user interface by simple numbers (e.g., numbers 1 to N for the N different menu points).

Furthermore, the control unit is configured, in reaction to the detected user input, to cause the remote user interface to provide, in particular to display, the selected submenu on the user device (without the need for the user to navigate through the control menu for arriving at the selected submenu on the remote user interface).

The remote user interface on the user device may be such that the set of menu points of the selected submenu can be displayed on the screen of the user device in a self-explanatory manner and/or using a textual description and/or using an icon for (each one of) the one or more menu points.

The set of menu points of the selected submenu may be identical for the local user interface (at the appliance) and for the remote user interface (at the user device). On the other hand, it may be beneficial to provide an extended set of menu points at the remote user interface, which comprises one or more additional menu points in addition to the set of menu points which are provided at the local user interface. In other words, the remote user interface may be used to extend the functionality of the appliance in an efficient and comfortable manner.

The control unit may be configured to cause the user device to output a notification to the user (e.g., on the screen of the user device), wherein the notification comprises a link, notably a software link, to the selected submenu within the remote user interface. The notification may be such that in response to selecting the notification (e.g., by clicking onto the notification), the selected submenu is automatically provided, notably displayed, within the remote user interface on the (screen of the) user device. Hence, the notification may be configured to automatically launch a software application at the user device, which provides the remote user interface. The software application may be launched directly within the selected submenu.

The notification may comprise an optical notification (e.g., in form of a pop-up) on the screen of the user device. Furthermore, the notification may comprise a haptic (e.g., a vibration) and/or an acoustic (e.g., a sound) notification. In particular, the notification may comprise a text-based and/or speech-based notification, indicating to the user that the selection of a menu point of the selected submenu can be performed at the remote user interface on the user device. Furthermore, the notification may (further) comprise an acoustic and/or a haptic stimulus for drawing the user's attention to the text-based and/or speech-based notification. As a result of this, a particularly comfortable and/or reliable user interface may be enabled.

Alternatively, or in addition, the control unit may be configured to cause the user device to automatically start the remote user interface (notably the software application for providing the remote user interface) with the selected submenu being (directly) displayed on the screen of the user device.

Hence, a control unit for an appliance is described, which allows a user to seamlessly interact with the appliance using a local and a remote user interface. In particular, the control unit allows the selection of a submenu on the local user interface to be automatically taken into account on the remote user interface, such that subsequent to selecting the submenu on the local user interface, the remote user interface is automatically directed to the selected submenu, without the need for the user to navigate to this submenu on the remote user interface. By doing this, the comfort and the reliability of a user interaction with the appliance is increased.

The control unit may be configured to cause a visual (and possibly acoustic and/or haptic) notification to be output at the user device. By doing this, the user is actively made aware of the possibility to select a menu point on the remote user interface, thereby further increasing the comfort and the reliability of the user interaction with the appliance.

The control unit may be configured to send an interface signal (notably an interface message) to the user device and/or to the processing unit (notably the server) that the user device is interacting with (via the communication network). The interface signal may be sent in reaction to the detected user input. The interface signal may be indicative of the selected submenu. Alternatively, or in addition, the interface signal may be indicative of an instruction to
- output a notification regarding the selected submenu at the user device; and/or
- automatically start the remote user interface with the selected submenu being displayed on the screen of the user device.

The processing unit and/or the user device may be configured to receive the interface signal. Furthermore, the processing unit and/or the user device may be configured to cause the notification to be output at the user device and/or to automatically start the remote user interface with the selected submenu. As a result of this, a seamless user interaction on the local and on the remote user interface may be implemented in a particularly reliable manner.

The control unit may be configured to receive a control signal (e.g., a control message) which is indicative of a menu point of the selected submenu that has been selected at the remote user interface on the user device. The control signal may have been sent by the user device and/or by the processing unit. Furthermore, the control unit may be configured to operate the appliance in dependence of the selected menu point. In particular, the local user interface may be updated in accordance with the selected menu point, thereby enabling the user to continue the user interaction in a seamless manner at the local user interface. As a result of this, the comfort and the reliability may be further improved.

The control unit may be configured to determine whether or not the set of menu points of the selected submenu can be displayed on the display screen of the appliance in a self-explanatory manner. This may be determined using a (pre-determined) list that indicates the zero, one or more submenus of the control menu, for which the respective set of menu points can be displayed in a self-explanatory manner; and/or that indicates the zero, one or more submenus of the control menu, for which the respective set of menu points cannot be displayed in a self-explanatory manner.

Furthermore, the control unit may be configured to cause the remote user interface to provide the selected submenu on the user device, if, notably only if, it is determined that the set of menu points of the selected submenu cannot be displayed on the display screen of the appliance in a self-explanatory manner. Hence, the redirection of the user to the remote user interface may be limited to the one or more submenus of the control menu of the appliance, for which the remote user interface provides an increased comfort and reliability. By doing this, the comfort and reliability of the user interface may be further increased.

According to a further aspect, a household appliance (such as a washing machine, a dishwasher, an oven, a cooking machine, a kitchen machine, a dryer, etc.) is described. The appliance comprises a local user interface at the appliance. Furthermore, the appliance comprises a control menu with one or more submenus for selecting an operation program and/or for setting an operation parameter of the appliance. In addition, the appliance is configured to be controlled using a remote user interface on a user device. The local user interface and/or the remote user interface may be used for navigating through the control menu for selecting an operation program and/or for setting an operation parameter. The appliance further comprises a control unit as described in the present document.

According to a further aspect, a system is described, which comprises the household appliance and a user device. The system may further comprise an (intermediate) processing unit (e.g., server).

According to another aspect, a method for controlling a user interface of an (household) appliance is described. The appliance comprises a local user interface located at the appliance and a control menu with one or more submenus for selecting an operation program and/or for setting an operation parameter of the appliance. Furthermore, the appliance is configured to be controlled using a remote user interface on a (handheld and/or mobile) user device.

The method comprises detecting a user input at the local user interface for selecting a submenu of the control menu (wherein the selected submenu may provide N menu points for the selection of N different operation programs). Furthermore, the method comprises, in reaction to detecting the user input, causing the remote user interface to provide the selected submenu on the user device. In particular, the method may comprise causing a notification to be output at the user device, wherein the notification is directly linked with the selected submenu, thereby enabling the user to directly jump to the selected submenu by clicking onto the notification. In some embodiments, method steps that may follow are
- selecting an operation program and/or setting an operation parameter of the appliance by the user using the user device and
- controlling the (household) appliance in accordance with the selected operation program and/or the set operation parameter.

It should be noted that the methods and systems including their preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
- Figure 1: shows an example system for providing a user interface for an appliance;
- Figure 2: shows an example control menu;
- Figure 3: shows an interaction scheme for interacting with an appliance; and
- Figure 4: shows a flow chart of an example method for providing a user interface for an appliance.

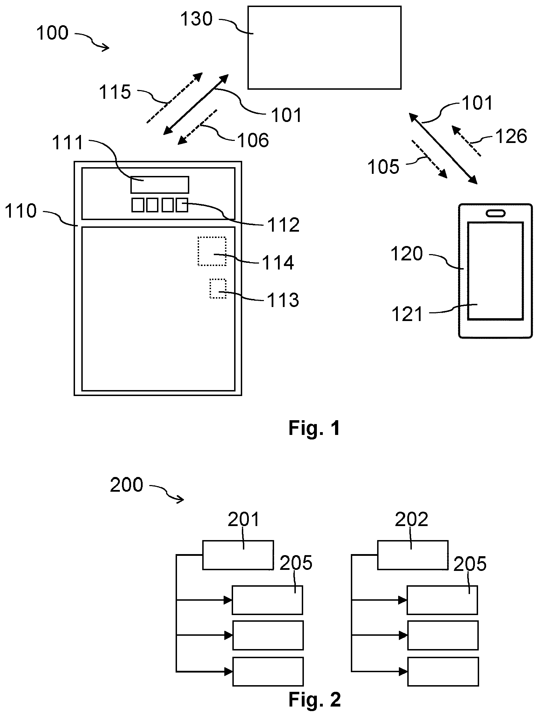

As outlined above, the present document is directed at enabling a user to interact with an appliance, in particular with a household appliance, in a particularly comfortable and reliable manner, even if the appliance has limited output and/or input capabilities. In this context, Fig. 1 shows an example system 100 which comprises an appliance 110 (such as an oven) and a user device 120 (such as a smartphone or a personal computer). The appliance 110 and the user device 120 are both configured to communicate with a processing unit 130, such as an (internet and/or backend) server, via a data communication interface or network 101, in particular a wireless or wired communication interface or network 101 such as WLAN, LAN, 3G, 4G or 5G.

The appliance 110 comprises a local user interface which may comprise an output element 111, such as a display screen, and/or one or more control elements 112, such as a knob or a push button. Furthermore, the appliance 110 typically comprises a control unit 114 for controlling the appliance 110 and/or a communication unit 113 for enabling a communication with the processing unit 130 via the communication interface 101.

The user device 120 typically comprises a user interface comprising a touch screen 121. The size of the touch screen 121 may be larger than the display screen 111 of the appliance 110 and/or may have increased output capabilities compared to the display screen 111 of the appliance 110.

The user interface of the appliance 110 may make use of a control menu 200 as shown in Fig. 2. The control menu 200 may comprise one or more menu levels, wherein at each menu level the control menu 200 may comprise a set of submenus 201, 202, wherein each submenu 201, 202 may comprise a set of menu points 205. A menu point 205 may be selected by a user using a control element 112. The selection of a menu point 205 may cause one or more of the following actions,
- open a further submenu 201 of the next level, wherein the submenu 201 comprises a further set of menu points 205;
- set an operation parameter of the appliance 110 (such as an operation temperature, a rotational speed, etc.); and/or
- select an operation program of the appliance 110 (wherein an operation program may define a combination and/or a temporal evolution of a plurality of operation parameters of the appliance 110).

Hence, the user interface of the appliance 110 may allow a user to navigate through a control menu 200 of the appliance 110 for setting an operation parameter and/or for selecting an operation program. The display screen 111 of the user interface may be relatively small. As a result of this, it may not be possible to render a complete submenu 201, 202 (with the corresponding set of menu points 205) of the control menu 200 on the display screen 111 of the local user interface of the appliance 110. In particular, it may not be possible to represent the individual menu points 205 (e.g., using a textual description and/or using an icon) in a manner that allows the user to directly understand the actions which are associated with the respective menu points 205. By way of example, it may only be possible to represent the individual menu points 205 as different numbers. The user may then need to consult the user manual of the appliance 110 to identify the meaning of the different numbers.

The appliance 110 may allow a remote control of the appliance 110 using the user device 120. For this purpose, the user device 120 may make use of a software application running on the user device 120, which is configured to provide a remote user interface of the appliance 110 on the user device 120, notably on the touch screen 121 of the user device 120 (typically in conjunction with the processing unit 130). The remote user interface may allow the user to navigate through the control menu 200 of the appliance 110. In view of the fact, that a user device 120 such as a smartphone typically comprises a relatively large screen 121, the control menu 200 may be represented in a detailed and comfortable manner. In particular, the remote user interface may be configured to provide a full representation of the set of menu points 205 of a submenu 201, 202, and/or to provide self-explanatory representations of the different menu points 205 (e.g., using a textual description and/or using an icon for each one of the different menu points 205).

A user may navigate through the control menu 200 using the user device 120. Furthermore, the user may select a particular menu point 205 (e.g., by pressing a corresponding control element of the user device 120). The selection of a particular menu point 205 may cause the user device 120 to send a control signal 126 to the appliance 110, wherein the control signal 126 is indicative of the menu point 205 that has been selected by the user. The control signal 126 may be sent to the processing unit 130 (e.g., the server) via the communication interface 101 between the user device 120 and the processing unit 130. Furthermore, a corresponding control signal 106 (which may be identical to or a modified version of the control signal 126) may be sent from the processing unit 130 to the appliance 110. The appliance 110 may then be operated in dependence on the received control signal 106. In particular, the appliance 110 may perform the action which is associated with the received control signal 106 (i.e., the action which is associated with the menu point 205 that has been selected in the remote user interface on the user device 120).

It may occur that the user starts to interact with the appliance 110 via the local user interface at the appliance 110. In particular, it may occur that the user selects a particular submenu 201, 202 of the control menu 200 at the local user interface of the appliance 110, e.g. by pressing a particular control element 112. The user may then realize that browsing through the different menu points 205 of the selected submenu 201, 202 on the local user interface is relatively uncomfortable (e.g., because of a missing explanation and/or description of the different menu points 205).

The control unit 114 of the appliance 110 may be configured to detect that the user has selected a particular submenu 201, 202 of the control menu 200 of the appliance 110. Furthermore, the control unit 114 may be configured to provide the user device 120 with a direct link to the selected submenu 201, 202. For this purpose, an interface signal 115 may be sent by the appliance 110, wherein the interface signal 115 is indicative of the submenu 201, 202 that has been selected by the user at the local user interface. The interface signal 115 may be sent to the processing unit 130 (e.g., the server) via the communication interface 101 between the appliance 110 ant the processing unit 130. Furthermore, a corresponding interface signal 105 may be forwarded from the processing unit 130 to the user device 120.

The interface signal 115, 105 may cause a notification to be shown on the screen 121 of the user device 120, wherein the notification may be linked to the selected submenu 201, 202. The notification may be designed such that when the user selects the notification, the remote user interface at the user device 120 directly jumps to the selected submenu 201, 202 of the control menu 200 of the appliance 110. As a result of this, the user is enabled to continue interacting with the appliance 110 using the remote user interface of the user device 120 directly within the submenu 201, 202 that has been selected using the local user interface of the appliance 110 (without the need to navigate through the control menu 200 at the remote user interface, in order to arrive at the already selected submenu 201, 202).

Alternatively, or in addition, the interface signal 115, 105 may cause the software application with the remote user interface to be started automatically at the user device 120. The software application may be started directly within the selected submenu 201, 202, in order to enable the user to continue interacting with the appliance 110 in a particularly comfortable, i.e., seamless, manner.

By way of example, a household appliance 110, such as an oven, may support N different auto-programs (i.e., operation programs), e.g., for N defined dishes like e.g., pizza or lasagne (e.g., N = 10 or more, or N = 30 or more). The appliance 110 may be equipped with a relatively small (e.g., 7-segment) LED user interface. Such a user interface may not be capable of showing the full name of the individual auto-programs. As a result of this, it may be required to select an auto-program using a number (between 1 and N) which is associated with the auto-program. The mapping between the different numbers and the different auto-programs may be provided within a user manual of the appliance 110. On the other hand, it may be possible to select an auto-program (as well as different heating modes of the appliance 110) using a software application running on a user device 120.

Using the scheme outlined in the present document, a user is automatically guided to the auto-program section (i.e., the selected submenu 201, 202) within the software application on the user device 120. Once the user selects the auto-program mode (i.e., a particular submenu 201, 202) on the local user interface of the appliance 110, the appliance 110 triggers a pop-up notification on the user device 120. The notification may suggest to the user and/or may enable the user to select the auto-program directly within the software application on the user device 120. Once the user clicks on this notification, the application opens directly in the section within which the user can select an auto-program and/or one or more operation parameters.

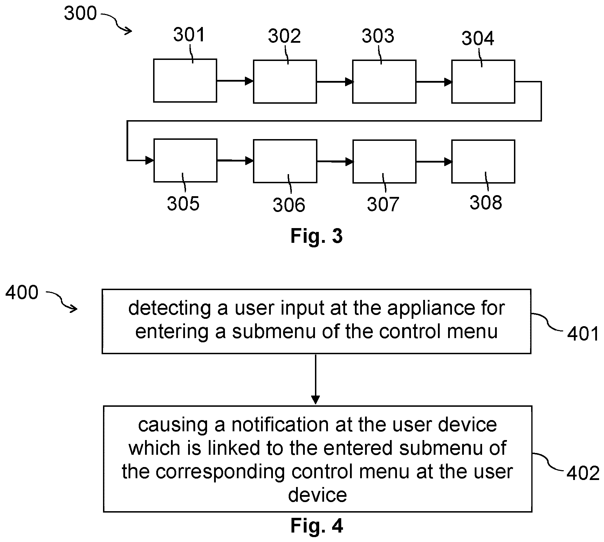

Fig. 3 illustrates a flow chart describing the user interaction scheme 300 described herein. The user may switch on the appliance (step 301). Furthermore, (in step 302) the user may select the auto-program mode on the local user interface of the appliance 110 (wherein the appliance 110 is already paired with a user device 120 of the user). This causes a notification to be received on the user device 120 (step 303). The user may select the notification (step 304), which causes the remote user interface of the appliance 110 (i.e., the corresponding software application) to be opened directly in the desired section (i.e., in the desired submenu 201, 202) for perform an auto-program selection (step 305). The user may then select an auto-program and one or more associated parameters (step 306). The selection may be sent (in step 307) to the appliance 110 (within a control signal 116, 106). Furthermore, the user may cause the selected auto-program to be started using the remote user interface at the user device 120 or the local user interface at the appliance 110 (step 308).

The interaction scheme 300 shortens the time and reduces the mental load of the user for selecting an appropriate setting of the appliance 110. The interaction scheme 300 guides the user to the right section 201, 202 within the remote user interface on the user device 120 (which might otherwise be overseen, if the user is not familiar with the remote user interface).

Fig. 4 shows a flow chart of an example (e.g., computer-implemented) method 400 for controlling a user interface of an appliance 110, in particular a household appliance such as a dishwasher, a washing machine, an oven, a cooking machine, a dryer, etc. The appliance 110 comprises a local user interface located at the appliance 110. The local user interface may comprise a display screen 111 and/or one or more control elements 112.

In addition, the appliance 110 is configured to be controlled using a remote user interface on a (mobile and/or handheld) user device 120, such as a smartphone or a tablet PC or a personal computer. The remote user interface may comprise a (relatively large) screen 121 and/or one or more (virtual) control elements of the user device 120. In particular, the remote user interface may comprise a touch screen 121 of the user device 120.

Furthermore, the appliance 110 comprises a control menu 200 with one or more submenus 201, 202 for selecting an operation program and/or for setting an operation parameter of the appliance 110. The control menu 200 may be provided on the local user interface and/or on the remote user interface. In particular, the local user interface and/or the remote user interface may enable a user to navigate through the control menu 200, e.g., for selecting a submenu 201, 202 and/or for selecting a menu point 205 within a submenu 201, 202.

As outlined above, the control menu 200 may comprise one or more menu levels, wherein each menu level may comprise one or more submenus 201, 202, with a submenu 201, 202 having a set of menu points 205. The menu points 205 may each be associated with an operation program of the appliance 110, with an operation parameter of the appliance 110 or with a further submenu 201, 202 (of the next lower level).

The method 400 comprises detecting 401 a user input at the local user interface for selecting a submenu 201, 202 of the control menu 200. The selected submenu 201 may comprise a set of (N) menu points 205.

Furthermore, the method 400 comprises, in reaction to detecting 401 the user input, causing 402 the remote user interface to (directly) provide the selected submenu 201, 202 on the user device 120. This may be achieved by sending an interface signal (notably an interface message) 115, 105 to the intermediate processing unit 130 and/or to the user device 120. The interface signal 115, 105 may instruct the processing unit 130 and/or the user device 120 to output a (pop-up) notification on the user device 120 which (when selected by the user) causes the selected submenu 201, 202 to be directly displayed on the screen 121 of the user device 120 (without the need for the user to navigate through the control menu 200 on the remote user interface for finding the selected submenu 201, 202). As a result of this, a particularly comfortable and reliable user interaction may be provided.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A control unit (114) for an appliance (110); wherein the appliance (110) comprises a local user interface located at the appliance (110); wherein the appliance (110) comprises a control menu (200) with one or more submenus (201, 202) for selecting an operation program and/or for setting an operation parameter of the appliance (110); wherein the appliance (110) is configured to be controlled using a remote user interface on a user device (120); wherein the control unit (114) is configured to
- detect a user input at the local user interface for selecting a submenu (201, 202) of the control menu (200); and
- in reaction to the detected user input, cause the remote user interface to provide the selected submenu (201, 202) on the user device (120).

2. The control unit (114) of claim 1, wherein
- the control unit (114) is configured to cause the user device (120) to output a notification to the user; and
- the notification comprises a link to the selected submenu (201, 202) within the remote user interface.

3. The control unit (114) of claim 2, wherein the notification is such that in response to selecting the notification, the selected submenu (201, 202) is automatically provided, notably displayed, within the remote user interface on the user device (120).

4. The control unit (114) of any of claims 2 to 3, wherein
- the notification comprises a text-based and/or speech-based notification, indicating to the user that selection of a menu point (205) of the selected submenu (201, 202) can be performed at the remote user interface; and
- in particular the notification comprises an acoustic and/or a haptic stimulus for drawing the user's attention to the text-based and/or speech-based notification.

5. The control unit (114) of any previous claim, wherein the control unit (114) is configured to cause the user device (120) to automatically start the remote user interface with the selected submenu (201, 202) being displayed on a screen (121) of the user device (120).

6. The control unit (114) of any previous claim, wherein
- the control unit (114) is configured to send an interface signal (115, 105) to the user device (120) and/or to a processing unit (130) that the user device (120) is interacting with, in reaction to the detected user input;
- the interface signal (115, 105) is indicative of the selected submenu (201, 202); and
- the interface signal (115, 105) is indicative of an instruction to
- output a notification regarding the selected submenu (201, 202) at the user device (120); and/or
- automatically start the remote user interface with the selected submenu (201, 202) being displayed on a screen (121) of the user device (120).

7. The control unit (114) of claim 6, wherein
- the control unit (114) is configured to send the interface signal (115, 105) to the intermediate processing unit (130), in particular to a server; and
- the user device (120) comprises a software application which is configured to interact with the processing unit (130) to provide the remote user interface at the user device (120).

8. The control unit (114) of any previous claim, wherein
- the selected submenu (201, 202) comprises a set of menu points (205); and
- a menu point (205) is associated with an operation program of the appliance (110) that is selected when selecting the menu point (205).

9. The control unit (114) of any previous claim, wherein
- the local user interface of the appliance (110) is such that a set of menu points (205) of the selected submenu (201, 202) cannot be displayed on a display screen (111) of the appliance (110) in a self-explanatory manner and/or in conjunction with a textual description and/or using an icon for the one or more menu points (205); and/or
- the remote user interface on the user device (120) is such that the set of menu points (205) of the selected submenu (201, 202) can be displayed on a screen (121) of the user device (120) in a self-explanatory manner and/or using a textual description and/or using an icon for the one or more menu points (205).

10. The control unit (114) of any previous claim, wherein the control unit (114) is configured to
- determine whether or not a set of menu points (205) of the selected submenu (201, 202) can be displayed on a display screen (111) of the appliance (110) in a self-explanatory manner; and
- cause the remote user interface to provide the selected submenu (201, 202) on the user device (120), if, notably only if, is it determined that the set of menu points (205) of the selected submenu (201, 202) cannot be displayed on the display screen (111) of the appliance (110) in a self-explanatory manner.

11. The control unit (114) of any previous claim, wherein the control unit (114) is configured to communicate with the user device (120) and/or with an intermediate processing unit (102) for providing the remote user interface on the user device (120) via a, in particular wireless, data communication network (101).

12. The control unit (114) of any previous claim, wherein the control unit (114) is configured to
- receive a control signal (126, 106) indicative of a menu point (205) of the selected submenu (201, 202) that has been selected at the remote user interface on the user device (120); and
- operate the appliance (110) in dependence of the selected menu point (205).

13. A household appliance (102); wherein
- the appliance (110) comprises a local user interface located at the appliance (110);
- the appliance (110) comprises a control menu (200) with one or more submenus (201, 202) for selecting an operation program and/or for setting an operation parameter of the appliance (110);
- the appliance (110) is configured to be controlled using a remote user interface on a user device (120); and
- the appliance (110) comprises a control unit (114) according to any previous claims.

14. A method (400) for controlling a user interface of an appliance (110); wherein the appliance (110) comprises a local user interface located at the appliance (110); wherein the appliance (110) comprises a control menu (200) with one or more submenus (201, 202) for selecting an operation program and/or for setting an operation parameter of the appliance (110); wherein the appliance (110) is configured to be controlled using a remote user interface on a user device (120); wherein the method (400) comprises,
- detecting (401) a user input at the local user interface for selecting a submenu (201, 202) of the control menu (200); and
- in reaction to detecting (401) the user input, causing (402) the remote user interface to provide the selected submenu (201, 202) on the user device (120).
